# EUROPEAN PATENT APPLICATION

(11) **EP 4 438 433 A1**
(43) Date of publication of application: **02.10.2024**
(21) Application number: 22897605.6
(22) Date of filing: 08.11.2022
(51) Int. Cl.: B61D 7/02, B61D 39/00

(54) **LARGE-VOLUME GRAIN HOPPER CAR SUITABLE FOR LOW-LOADING HOPPER BIN**

(30) Priority: 25.11.2021 CN 202111410362
(71) Applicant: CRRC Meishan Co., Ltd., Meishan, Sichuan 620032 (CN)
(72) Inventor: LU, Qiang, Meishan, Sichuan 620032 (CN); YANG, Shiwei, Meishan, Sichuan 620032 (CN); LI, Dong, Meishan, Sichuan 620032 (CN); XUE, Hailian, Meishan, Sichuan 620032 (CN); LIU, Can, Meishan, Sichuan 620032 (CN); JIN, Yequan, Meishan, Sichuan 620032 (CN); WANG, Pu, Meishan, Sichuan 620032 (CN); FENG, Chuangyou, Meishan, Sichuan 620032 (CN); LONG, Jianguo, Meishan, Sichuan 620032 (CN); GU, Meina, Meishan, Sichuan 620032 (CN); TAO, Bin, Meishan, Sichuan 620032 (CN); ZHONG, Xiaofeng, Meishan, Sichuan 620032 (CN); LI, Junsheng, Meishan, Sichuan 620032 (CN); ZHAO, Shouxin, Meishan, Sichuan 620032 (CN); ZHANG, Zhenlong, Meishan, Sichuan 620032 (CN); ZHANG, Zhifa, Meishan, Sichuan 620032 (CN)
(74) Representative: Ipside
(86) International application number: PCT/CN2022/130563
(87) International publication number: WO 2023/093522

(57) **Abstract**

The present invention discloses a large-volume grain hopper car suitable for a low-loading position hopper bin. The grain hopper car includes a car body; a loading opening of the car body is provided with a top cover opening and closing mechanism, the top cover opening and closing mechanism includes a top cover and a transmission shaft, the transmission shaft is located inside the car body, the transmission shaft is connected to a top cover driving mechanism, the transmission shaft is hinged to a crank throw, and the crank throw is hinged to the top cover. The beneficial effects of the present invention are as follows: According to the grain hopper car, the arrangement of the top cover opening and closing mechanism is innovated in order to improve the volume of the car, and the transmission shaft, which is conventionally disposed on the car roof for opening and closing the top cover, is disposed in the internal space of the car body in such a way that the upper space of the car roof is utilized to the maximum extent, and the distance between the car roof and the upper limit is closest, so that the volume of the car is improved under the condition of the same car length, and the loading capacity of the whole train is improved; besides, by translating or sliding the top cover, the occupancy of the upper space in the opening process of the top cover is decreased, thus the grain hopper car is suitable for a station yard with the low-loading position hopper bin condition.

## Description

### Technical Field

The present invention relates to the field of grain hopper car technology, in particular to a large-volume grain hopper car suitable for a low-loading position hopper bin.

### Background of the Invention

The grain hopper car is designed to transport bulk grain. A loading opening is provided at the top of a compartment of the grain hopper car, and the lower portion of the compartment is funnel-shaped to match with loading and unloading facilities. For loading, the grain is loaded into a car body through the loading opening by means of a discharge chute, and for unloading, the grain automatically flows out by its own gravity. Compared with the conventional transportation with boxcar and gondola car, the grain hopper car can effectively reduce the loading and unloading operation time, accelerate the car turnover, improve the loading and unloading working conditions and reduce the transportation cost.

The overall weight of the top cover of the existing grain hopper car is divided by segments in such a way that each segment of the top cover is operable by a single person. However, operating all the top cover segments for a grain loading takes a long auxiliary time, thus further affecting the transportation efficiency. In addition, the operator needs to open and close the above mentioned top cover structure on the car roof, and improper operation will cause personal injury.

CN101618725B discloses a grain hopper car with a pneumatic and manual opening top cover, which improves the operating efficiency and the safety of operators. However, the invention mainly has the following shortcomings: the transmission shaft for opening the top cover is disposed on the car roof, which occupies the space in the height direction of the car, reduces the loading height in the car, and is not conducive to improving the volume of the car; and the arrangement is not suitable for a station yard with the low-loading position hopper bin condition and compromises the applicability of the car.

### Summary of the Invention

An object of the present invention is to provide a large-volume grain hopper car suitable for a low-loading position hopper bin, which solves the problem of time-consuming and laborious operation for opening and closing the conventional top covers.

The object of the present invention is achieved by the following technical solution:
A large-volume grain hopper car suitable for a low-loading position hopper bin, which includes a car body, a loading opening of the car body is provided with a top cover opening and closing mechanism, the top cover opening and closing mechanism includes a top cover and a transmission shaft, the transmission shaft is located inside the car body, the transmission shaft is connected to a top cover driving mechanism, the transmission shaft is hinged to a crank throw, and the crank throw is hinged to the top cover. The transmission shaft is disposed in the internal space of the car body in such a way that the upper space of the car roof is utilized to the maximum extent, and the distance between the car roof and the upper limit is closest, so that the volume of the car is improved under the condition of the same car length, and the loading capacity of the whole train is improved. With flexible design, the other side of the top cover is slidably or translationally disposed on the car body depending on the actual needs.

Further, the car body is provided with a coupler and draft gear, an air brake device, a manual brake device and a bogie to achieve various functions of the car body.

Further, the car body includes an underframe, the bottom of the underframe is provided with a hopper, an upper portion of the underframe is provided with front and rear side walls as well as left and right end walls, a car roof is provided on upper portions of the side walls and the end walls, the hopper is provided with an unloading opening, and the car roof is provided with a loading opening. The underframe is a bottom supporting frame, which is surrounded by the side walls and the end walls, the hopper surrounds the bottom and achieves the unloading by opening and closing, and the top cover covers the top and achieves the loading by opening and closing.

Further, the underframe includes left and right end sills as well as front and rear side sills, a cross bearer in the middle and crossties at ends are arranged between the side sills, a draft sill is provided between the end sill and the outermost cross bearer, a body bolster is provided between the draft sill and the side sill, and a steel floor located above is provided between the end sill and the outermost cross bearer. The underframe is formed by welding the end sills, the body bolster, the draft sill, the side sills, the cross bearer, the crossties and the steel floor together.

Further, the hopper includes left and right end hopper sheets, a transverse hopper sheet, and front and rear longitudinal hopper sheets, wherein the end hopper sheets, the transverse hopper sheet and the longitudinal hopper sheets define a funnel-like shape with a big top and a small bottom, and the plane where the unloading opening of the hopper is located is disposed obliquely.

Further, the side wall includes a top side sill, the top side sill is connected to a lateral sidewall skin, the inner side of the sidewall skin is provided with a partition wall, the sidewall skin is arc-shaped and the top side sill and the partition wall are used for support connection of the sidewall skin.

Further, the partition wall includes a partition panel, the sidewall skin is connected to the partition panel, the partition panel is connected to a primary diagonal brace, a stiffening beam located on the partition panel is connected between the primary diagonal brace and the sidewall skin, a primary horizontal band is connected between the opposite top side sills, and a stiffening plate is disposed on the primary horizontal band.

Further, the end wall includes an endwall plate, wherein the endwall plate is provided with an upper end cross beam and a secondary horizontal band, and a secondary diagonal brace, a column and a strengthening plate are arranged between the endwall plate and the underframe.

Further, the car roof includes a car roof sheet, wherein the car roof sheet is provided with a longitudinal loading opening frame and an end loading opening frame, and the car roof sheet is also provided with a longitudinal stiffening beam, a car roof bending beam and a connecting angle.

Further, one side of the top cover is hinged to the crank throw, the other side of the top cover is hinged to a connecting lever, and the connecting lever is hinged to the car body. The driving mechanism provides power to drive the transmission shaft to rotate, so that the crank throw rotates, and the connecting lever rotates synchronously to achieve the translation of a four-connecting-rod mechanism and the sliding opening and closing of the top cover at the loading opening.

Further, the middle part of the transmission shaft is disposed on a split bearing seat in the car body, two ends of the transmission shaft are arranged on end bearing seats outside the car body, so as to achieve the rotary support installation of the transmission shaft by means of the bearing seats.

Further, the loading opening of the car body is provided with a transverse limit member, the transverse limit member is a transverse locking base, the transverse locking base is provided with a locking groove, and a locking rod on the top cover fits into the locking groove to transversely limit and fasten the cover body in the closed state.

Further, a longitudinal limit member is provided at the loading opening of the car body, the longitudinal limit member is a longitudinal stopping block, which is used to longitudinally limit and fasten the cover body in the closed state.

Further, a lever stopping block is provided on the car body, the lever stopping block is located at the opening position of the connecting lever and supports and limits the connecting lever in the closed state.

Further, the transmission shaft is connected to a rocker arm, the rocker arm is hinged to a telescopic member, the telescopic member is hinged to the car body, the swing and rotation of the rocker arm are achieved by means of the hinged telescopic member, and the transmission shaft is driven to rotate synchronously.

Further, the telescopic member is a self-locking air cylinder, which is not unlocked unless the pressure reaches a certain value to push out the bottom door.

Further, the unloading opening of the car body is provided with a sealed bottom door mechanism, the sealed bottom door mechanism includes a bottom door frame, the bottom door and a slideway, the bottom door is slidably disposed on the slideway, the bottom door frame is in contact fit with the bottom door, and a support portion on the slideway has a support height gradually increasing along a closing direction, and/or a lifting portion of the bottom door has a lifting height gradually increasing along an opening direction. The bottom door is raised and supported by the slideway, or the bottom door is raised and lifted by itself, so that the bottom door is close to the bottom door frame when it is closed, and away from the bottom door frame when it is opened, which can not only ensure sealing fit, but also reduce friction and facilitate opening.

Further, the bottom door frame includes left and right transverse bottom door frames, a lateral bottom door frame and a cross beam are connected between the transverse bottom door frames, and a hopper opening is formed between the lateral bottom door frame, the transverse bottom door frames and the cross beam, so that the bottom door is closed for sealing and opened for unloading.

Further, the bottom door includes a bottom door plate, the bottom door plate is slidably disposed on the slideway, and the bottom door plate is connected to a sliding drive mechanism. Horizontal sliding of the bottom door plate is achieved by the driving mechanism to achieve opening and closing functions of the bottom door plate.

Further, the sliding drive mechanism includes a rack, the rack is disposed on the bottom door plate, the rack is engaged with a gear, and the gear is disposed on a bottom door shaft, so that transmission sliding of the bottom door plate is achieved by means of the gear and the rack. Similarly, the sliding drive mechanism may be of other structural types.

Further, the bottom door plate is provided with two parallel racks, and the left and right racks ensure synchronization and stability of sliding.

Further, an upper portion of the slideway is provided with a low support portion and a high support portion, and a height difference between the low support portion and the high support portion is h; and a lower portion of the bottom door is provided with a low lifting portion and a high lifting portion, and a height difference between the low lifting portion and the high lifting portion is h.

Further, the slideway is a roller way, the roller way includes left and right joists, a pin shaft is disposed between the joists, and a rotatable roller is disposed on the pin shaft as a support portion. The height difference between the support portions is consistent with the height difference between the lifting portions, thereby enabling compensatory stable raising or lowering. The roller is used as a support and sliding component of the slideway.

Further, a connecting plate is connected between the left and right joists.

Further, the roller includes a first roller acting as the high support portion, and further includes a second roller and a third roller acting as the low support portion, and the rollers with different height differences form a stepped support arrangement.

Further, the bottom door plate is provided with a sealing adjustment plate acting as the high lifting portion, a lower end face of the bottom door plate is provided as the low lifting portion, the sealing adjustment plate has a height of h, and the sealing adjustment plate is used as a backing plate to form a stepped lifting arrangement.

Further, the bottom door plate is provided with two parallel slideways to ensure stability of sliding lifting.

The beneficial effects of the present invention are as follows:
1. According to the grain hopper car, the arrangement of the top cover opening and closing mechanism is innovated in order to improve the volume of the car, and the transmission shaft, which is conventionally disposed on the car roof for opening and closing the top cover, is disposed in the internal space of the car body in such a way that the upper space of the car roof is utilized to the maximum extent, and the distance between the car roof and the upper limit is closest, so that the volume of the car is improved under the condition of the same car length, and the loading capacity of the whole train is improved; besides, by translating or sliding the top cover, the occupancy of the upper space in the opening process of the top cover is decreased, thus the grain hopper car is suitable for a station yard with the low-loading position hopper bin condition.
2. The top cover plate adopts a profiled structure to reduce the available surface of the top cover plate and increase the stiffness thereof. Two ends of the top cover are provided with self-locking air cylinders to guarantee the vertical locking capacity of the top cover in the closed state. The end of the top cover is provided with a longitudinal stopping block to guarantee the longitudinal locking capacity of the top cover in the closed state. A locking base and a locking rod are provided in the centre of the top cover to guarantee the transverse locking capacity of the top cover in the closed state. The bearing seats and the crank throw adopt split structures, which are convenient for disassembly and maintenance of the transmission shaft. Sealed deep groove ball bearings are used as the end bearing seats.
3. The rollers with different heights are arranged in the roller way of the bottom door. When the bottom door is opened and closed, automatic change in a gap between the bottom door and the bottom door frame when the bottom door is opened and closed is achieved through contact combination between the bottom door plate and the sealing adjustment plate. When closing the door, the first roller and the third roller are in contact with and compress the bottom door plate, and there is no gap between the bottom door plate and the bottom door frame, thereby completely sealing goods. When opening the door, the first roller is disengaged from the bottom door plate, the second roller and the third roller are in contact with and support the bottom door plate, and a gap is formed between the bottom door plate and the bottom door frame to facilitate opening.
4. The top cover and the bottom door may be opened and closed in pneumatic manner, which improves the efficiency, reduces the labor intensity of operators and guarantees the safety of operation.

The aforementioned main solution of the present invention and further alternatives thereof may be combined freely to form a plurality of solutions, all of which may be adopted and claimed in the present invention; moreover, in the present invention, (non-conflicting) alternatives may be combined freely with each other and with other alternatives. Multiple combinations are clear to those skilled in the art based on the prior art and the common knowledge after understanding the solutions of the present invention, all of which are technical solutions to be protected by the present invention and are not exhaustive here.

### Brief description of the Drawings

FIG. 1 is a front view of a structure according to the present invention.
FIG. 2 is a front view of a structure of a car body according to the present invention.
FIG. 3 is a top view of a structure of an underframe according to the present invention.
FIG. 4 is a top view of a structure of a hopper according to the present invention.
FIG. 5 is a left view of a structure of a side wall according to the present invention.
FIG. 6 is a left view of a structure of an end wall according to the present invention.
FIG. 7 is a top view of a structure of a car roof according to the present invention.
FIG. 8 is a front view of a structure of a top cover opening and closing mechanism according to the present invention.
FIG. 9 is a top view of the structure of the top cover opening and closing mechanism according to the present invention.
FIG. 10 is a left view of the structure of the top cover opening and closing mechanism according to the present invention (in the closed state).
FIG. 11 is a left view of the structure of the top cover opening and closing mechanism according to the present invention (in the open state).
FIG. 12 is a partial schematic diagram of a split bearing seat according to the present invention.
FIG. 13 is a partial schematic diagram of a transverse locking base according to the present invention.
FIG. 14 is a partial schematic diagram of a longitudinal stopping block according to the present invention.
FIG. 15 is a front view (sectional view) of a structure of a sealed bottom door mechanism according to the present invention.
FIG. 16 is an axial view of a structure of a bottom door frame according to the present invention.
FIG. 17 is a front view (sectional view) of a structure of a bottom door according to the present invention.
FIG. 18 is an axial view of the structure of the bottom door according to the present invention.
FIG. 19 is an axial view of a structure of a roller way according to the present invention.
FIG. 20 is a front view (sectional view) of the structure of the roller way according to the present invention.
FIG. 21 is a schematic diagram of an opening process of the bottom door according to the present invention.
FIG. 22 is a schematic diagram of the bottom door in an open state according to the present invention.
FIG. 23 is a schematic diagram of the bottom door in a closed state according to the present invention.

Numerals in the figures: 1. car body, 2. top cover opening and closing mechanism, 3. sealed bottom door mechanism, 4. coupler and draft gear, 6. manual brake device, 7. bogie.
11. underframe, 12. hopper, 13. side wall, 14. end wall, 15. car roof; 111. end sill, 112. body bolster, 113. draft sill, 114. side sill, 115. cross bearer, 116. crosstie, 117. steel floor; 121. end hopper sheet, 122. transverse hopper sheet, 123. longitudinal hopper sheet, 124. reinforcement plate; 131. top side sill, 132. sidewall skin, 133. partition wall, 1331. partition panel, 1332. primary diagonal brace, 1333. stiffening beam, 1334. primary horizontal band, 1335. stiffening plate; 141. endwall plate, 142. upper end cross beam, 143. secondary horizontal band, 144. secondary diagonal brace, 145. column, 146. strengthening plate; 151. car roof sheet, 152. longitudinal stiffening beam, 153. car roof bending beam, 154. longitudinal loading opening frame, 155. end loading opening frame, 156. connecting angle.
21. top cover, 22. transmission shaft, 23. bearing support, 24. split bearing seat, 25. end bearing seat, 26. longitudinal stopping block, 27. transverse locking base, 28. connecting lever stopping block, 29. self-locking air cylinder, 211. connecting lever, 212. crank throw, 213. rocker arm.
31. bottom door frame, 32. bottom door, 33. roller way; 311. lateral bottom door frame, 312. transverse bottom door frame, 313. cross beam; 321. bottom door plate, 322. sealing adjustment plate, 323. rack, 324. bottom door shaft, 325. gear; 331. joist, 332. pin shaft, 333. connecting plate, 334. roller, 3341. first roller, 3342. second roller, 3343. third roller.

### Detailed Description of Embodiments

The present invention will be described through the following non-restrictive embodiments.

### Example 1:

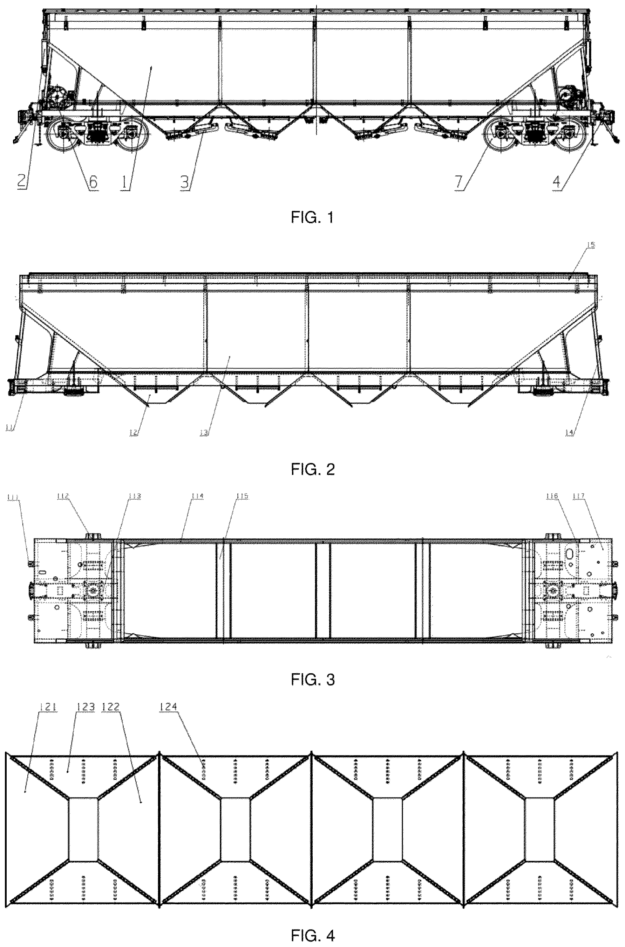

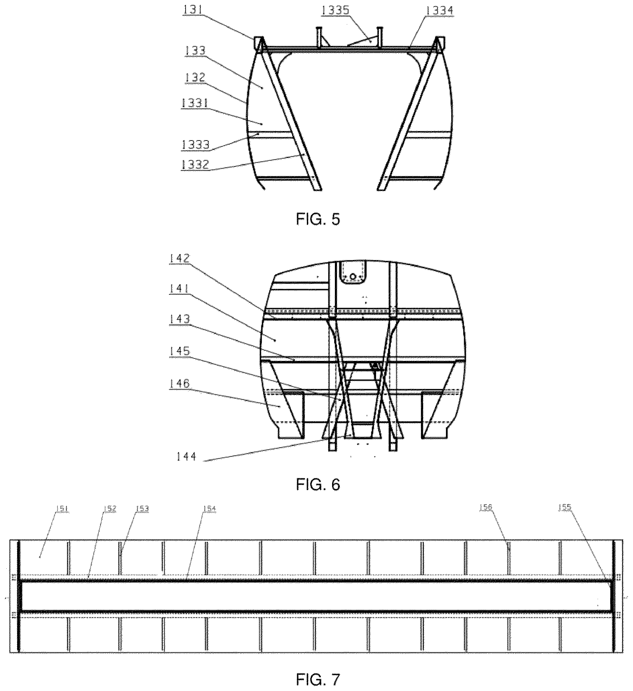

Referring to FIG. 1 to FIG. 7, there is shown a large-volume grain hopper car suitable for a low-loading position hopper bin, which includes a car body 1, and the car body 1 is provided with a coupler and draft gear 4, an air brake device, a manual brake device 6 and a bogie 7.

The car body 1 includes an underframe 11, the bottom of the underframe 11 is provided with a hopper 12, and the hopper 12 is provided with an unloading opening. The hopper is used for lifting grain goods, and free fall of the goods is achieved by opening the unloading opening of the hopper. An upper portion of the underframe 11 is provided with front and rear side walls 13 as well as left and right end walls 14. The side walls and the end walls define a space for receiving grain goods. A car roof 15 is provided on upper portions of the side walls 13 and the end walls 14, the car roof 15 is provided with a loading opening. The car roof is used to shield the grain goods, and the loading operation is achieved by opening the loading opening on the car roof.

The underframe 11 includes left and right end sills 111 as well as front and rear side sills 114, and a rectangular frame structure is formed among the end sills and the side sills. A cross bearer 115 in the middle and crossties 116 at ends are transversally arranged between the side sills 114, and the large and crossties are used to strengthen the connection between the front and rear side sills. A draft sill 113 is provided between the end sill 111 and the outermost cross bearer 115, and the draft sill is subjected to a longitudinal traction force. A body bolster 112 is provided between the draft sill 113 and the side sill 114 to strengthen the support. A steel floor 117 located above is provided between the end sill 111 and the outermost cross bearer 115, and the steel floor is used to shield the gaps at the ends and form a mounting plane.

The hopper 12 includes left and right end hopper sheets 121, a transverse hopper sheet 122, and front and rear longitudinal hopper sheets 123, wherein the end hopper sheets 121, the transverse hopper sheet 122 and the longitudinal hopper sheets 123 define a funnel-like shape with a big top and a small bottom to facilitate the free fall of the grain goods, and a lower portion of the hopper is provided with the unloading opening. The height of the lowermost end of the end hopper sheet is lower than that of the transverse hopper sheet 122, so that the plane where the unloading opening of the hopper 12 is located is disposed obliquely, thereby achieving an oblique arrangement of a sealed bottom door mechanism 3.

The side wall 13 includes a top side sill 131, and the top side sill is located above for support connection of the sidewall skin. The top side sill 131 is connected to the lateral sidewall skin 132, the inner side of the sidewall skin 132 is provided with a partition wall 133, and the sidewall skin 132 is in an arced shape protruding outwards to improve the internal loading capacity.

The partition wall 133 includes a partition panel 1331, and the partition panel is used to partially separate the loading space to facilitate the falling of the grain goods in different parts through corresponding unloading openings. The sidewall skin 132 is connected to the partition panel 1331 and the partition panel is capable of supporting the sidewall skin. The partition panel 1331 is connected to a primary diagonal brace 1332, and the primary diagonal brace supports the partition panel and the sidewall skin. A stiffening beam 1333 located on the partition panel 1331 is connected between the primary diagonal brace 1332 and the sidewall skin 132 to strengthen the connection structure. A primary horizontal band 1334 is connected between the opposite top side sills 131, and a stiffening plate 1335 is disposed on the primary horizontal band 1334. The primary horizontal band is connected between the opposite top side sills for tie connection of the top side sills, so as to improve the structural strength.

The end wall 14 includes an endwall plate 141, and the endwall plate is in a bending structure with a vertical upper portion and a tilted lower portion, which surrounds the ends. The endwall plate 141 is provided with an upper end cross beam 142 and a secondary horizontal band 143 to strengthen the endwall plate itself. A secondary diagonal brace 144, a column 145 and a strengthening plate 146 are arranged between the endwall plate 141 and the underframe 11 to support the endwall plate and guarantee the stability of the endwall plate.

The car roof 15 includes a car roof sheet 151, wherein the car roof sheet 151 is provided with a longitudinal loading opening frame 154 and an end loading opening frame 155, and the longitudinal loading opening frame 154 and the end loading opening frame 155 define a rectangular loading opening. The car roof sheet 151 is also provided with a longitudinal stiffening beam 152, a car roof bending beam 153 and a connecting angle 156 to strengthen connection of the car roof sheet itself and the loading opening frames.

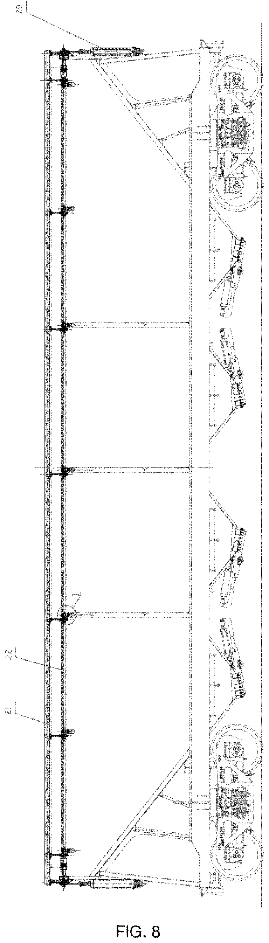

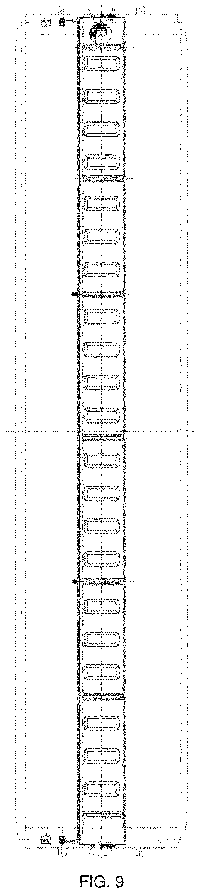

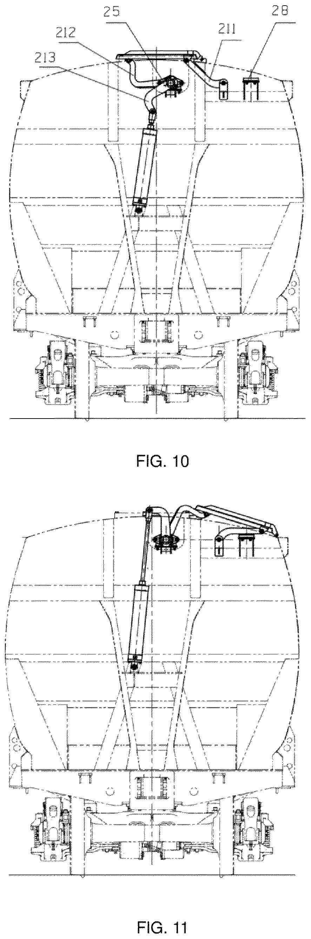

Referring to FIG. 8 to FIG. 14, the loading opening of the car body 1 is provided with a top cover opening and closing mechanism 2, the top cover opening and closing mechanism 2 includes a top cover 21, a transmission shaft 22, a bearing support 23, a split bearing seat 24, an end bearing seat 25, a longitudinal stopping block 26, a transverse locking base 27, a lever stopping block 28, a self-locking air cylinder 29, a connecting lever 211, a crank throw 212 and a rocker arm 213.

The top cover 21 is located at the loading opening of the car body. The top cover 21 at the loading opening may be opened or closed to achieve loading or sealing. The top cover 21 is formed by welding a top cover plate and a top cover beam together, a support is disposed on the top cover 21, and the support is hinged to the crank throw 212. The top cover 21 adopts a profiled structure to reduce the available surface of the top cover and increase the stiffness thereof.

One side of the top cover 21 is hinged to the crank throws 212 (seven on the car body and two outside the car), the crank throws 212 are connected to the transmission shaft 22 rotating in the car body, the other side of the top cover 21 is hinged to the connecting lever 211, the connecting lever 211 is hinged to the car body, so that a four-connecting-rod mechanism is formed among the car body, the crank throws, the connecting lever and the top cover to achieve translation of the upper top cover 21, and the required overall installation space is reduced and the applicability is improved with the built-in arrangement of the transmission shaft 22.

The middle part of the transmission shaft 22 is disposed on the split bearing seat 24 in the car body, two ends of the transmission shaft 22 are arranged on the end bearing seats 25 outside the car body, so as to achieve the rotary installation of the transmission shaft 22 by means of the split bearing seat 24 and the end bearing seats 25. The bearing seats and the crank throw adopt split structures, which are convenient for disassembly and maintenance of the transmission shaft.

The bearing seats adopt split bearings, and nylon shaft sleeves are provided in the bearings for wear resistance and lubrication. Each of the end bearing seats is composed of a bearing cap, a rubber gasket and a deep groove ball bearing with a sealing ring, and the rain-proof and dust-proof functions of the ends are achieved by means of a labyrinth structure, the sealing ring and the gasket.

The split bearing seat 24 is installed on the bearing support 23, and the bearing support 23 is fixed on the side wall beam. The support is provided with an oblong hole to be directly connected to the split bearing seat by means of a bolt, and an adjustment shim is provided to achieve longitudinal and vertical adjustment.

A transverse limit member and a longitudinal limit member are arranged at the loading opening of the car body. The longitudinal, transverse and vertical locking functions are achieved by means of the longitudinal stopping block, the transverse locking base and the self-locking air cylinder.

The transverse limit member is the transverse locking base 27, the transverse locking base 27 is provided with a locking groove, and a locking rod on the top cover 21 fits into the locking groove to guarantee the transverse locking capacity of the top cover in the closed state. The longitudinal limit member is the longitudinal stopping block 26, and the longitudinal stopping block guarantees the longitudinal locking capacity of the top cover in the closed state.

The lever stopping block 28 is provided on the car body, the lever stopping block 28 is located at the opening position of the connecting lever 211 and used to limit the connecting lever. When the top cover is in the open state, the connecting lever is placed on the lever stopping block to limit the four-connecting-rod mechanism.

The transmission shaft 22 is connected to a driving mechanism. The driving mechanism includes the rocker arm 213 and a telescopic member, the transmission shaft 22 is connected to the rocker arm 213, the rocker arm 213 is hinged to the telescopic member, the telescopic member is hinged to the car body, and the telescopic member is a self-locking air cylinder 29. The self-locking air cylinder provides driving force to drive the rocker arm to rotate and achieve the rotation of the transmission shaft. The self-locking air cylinder guarantees the vertical locking capacity of the top cover in the closed state.

Opening of the top cover: The self-locking air cylinder is inflated by an air brake system. When the pressure reaches a certain value, a piston rod of the self-locking air cylinder pushes out to drive two groups of rocker arms outside the car body, and the rocker arms drive the transmission shaft located in the centre of the car body to rotate, the transmission shaft drives the crank throws inside the car body and a top cover support to move, and a support on the opposite side of the top cover support is connected to a fixed support on the end wall by means of a connecting rod to limit the top cover and complete the opening of the top cover; and the top cover is closed when the air cylinder retracts.

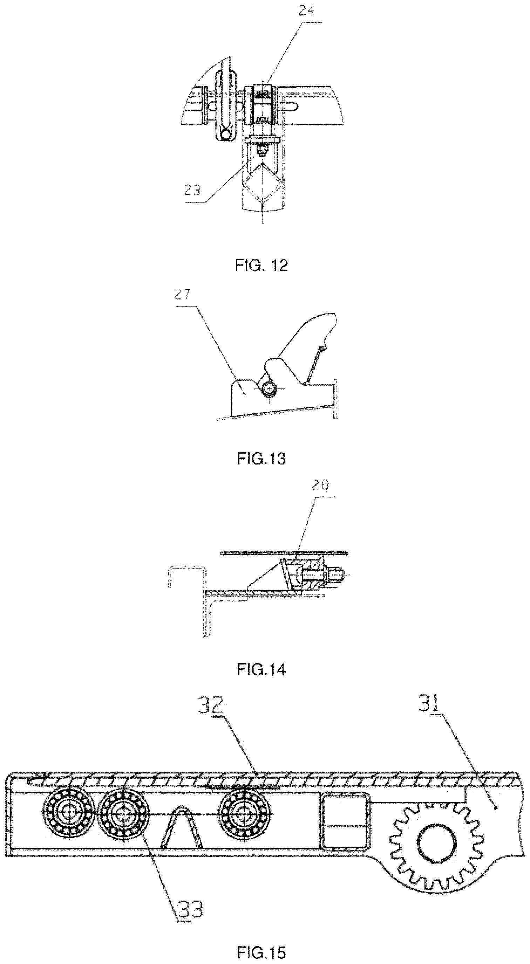

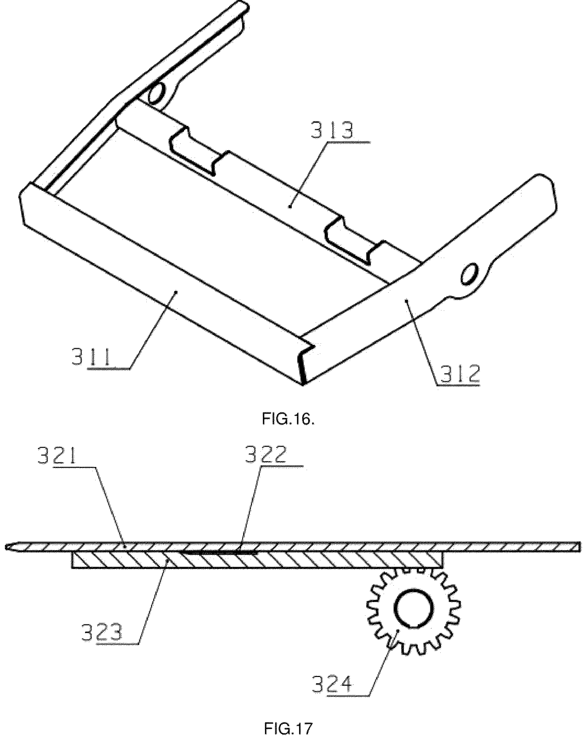

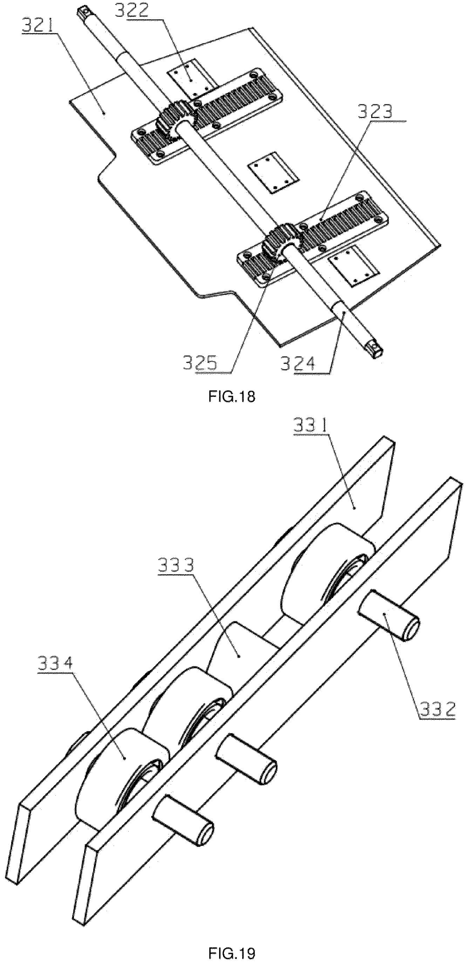

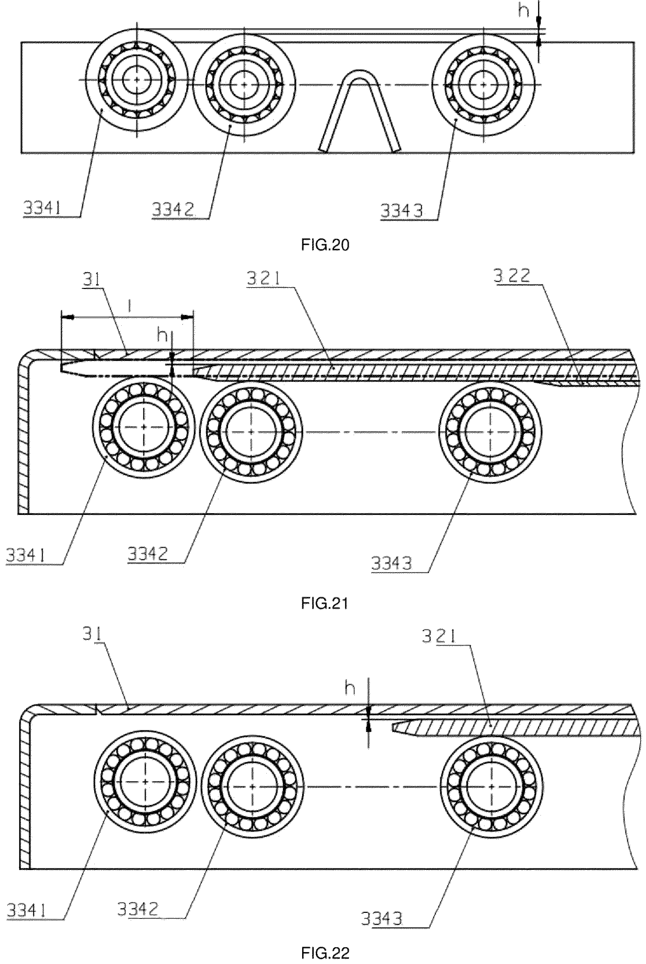

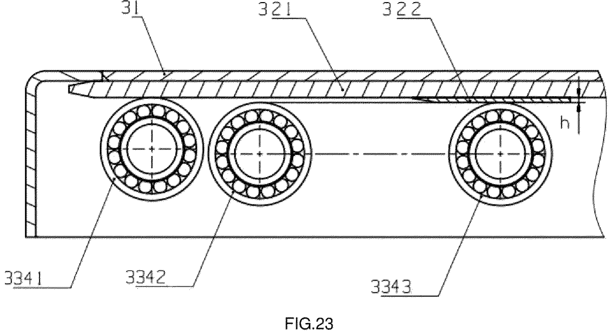

Referring to FIG.15 to FIG. 23, the unloading opening of the car body 1 is provided with the sealed bottom door mechanism 3, the sealed bottom door mechanism 3 includes a bottom door frame 31, a bottom door 32 and a slideway, the bottom door 32 is slidably disposed on the slideway, the bottom door frame 31 is in contact fit with the bottom door 32, and a support portion on the slideway has a support height gradually increasing along a closing direction, and a lifting portion of the bottom door 32 has a lifting height gradually increasing along an opening direction.

Therefore, at the time of closing, because the support height of the slideway to the bottom door 32 is increasing and the lifting height of the bottom door 32 is increasing, a gap between the bottom door 32 and the bottom door frame 31 becomes smaller until they are in contact fit. At the time of opening, because the support height of the slideway to the bottom door 32 is decreasing and the lifting height of the bottom door 32 is decreasing, the gap between the bottom door 32 and the bottom door frame 31 becomes larger, which reduces friction between the bottom door 32 and the bottom door frame 31 and facilitates opening of the bottom door 32.

Specifically, the bottom door frame 31 includes left and right transverse bottom door frames 312, a lateral bottom door frame 311 and a cross beam 313 are connected between the transverse bottom door frames 312 by welding, and a rectangular hopper opening is formed among the lateral bottom door frame 311, the transverse bottom door frames 312 and the cross beam 313.

The bottom door 32 includes a bottom door plate 321, the bottom door plate 321 is slidably disposed on the slideway, and the bottom door plate 321 is connected to a sliding drive mechanism. The sliding drive mechanism includes racks 323, two parallel racks 323 are fixed on the bottom door plate 321 by a screw, the racks 323 are engaged with a gear 325, the gear 325 is connected to a bottom door shaft 324 through a pin key and may rotate about a central axis of the bottom door shaft 324, and the bottom door shaft 324 may be driven to rotate by a motor to drive the gear 325 to rotate and engage with the racks 323, so as to achieve forward and backward movement of the bottom door plate 321.

The bottom door plate 321 is provided with two parallel slideways to ensure stability of sliding support for the bottom door 32. The slideways are roller ways 33, the roller ways 33 each include left and right joists 331, a pin shaft 332 is disposed between the joists 331, a rotary roller 334 is disposed at an upper portion of the pin shaft 332 as a support portion, and a connecting plate 333 is welded between the left and right joists 331 to connect the left and right joists 331 together.

The support portion includes a low support portion and a high support portion, a first roller 3341 acts as the high support portion, a second roller 3342 and a third roller 3343 with the same height act as the low support portion, and a height difference between the low support portion and the high support portion is h. A lower portion of the bottom door 32 is provided with a low lifting portion and a high lifting portion; the bottom door plate 321 is fixedly provided with a sealing adjustment plate 322 by a screw as the high lifting portion, a lower end face of the bottom door plate 321 is the low lifting portion, and a height difference between the low lifting portion and the high lifting portion, namely, the height of the sealing adjustment plate 322, is h.

Opening of the bottom door: Before opening, the first roller 3341 is in contact with the bottom door plate 321, with a gap h between the second roller 3342 and the bottom door plate 321, and the third roller 3343 is in contact with the sealing adjustment plate 322, so that the bottom door plate 321 is fit to the bottom door frame 31 without a gap. When opening, the bottom door shaft 324 rotates, driving the gear 325 to rotate in the same direction; and the gear 325 is engaged with the racks 323, converting the rotation into translation, and driving the bottom door plate 321 to move a distance I to the right as shown in the figure. The first roller 3341 is disengaged from the bottom door plate 321, the third roller 3343 is disengaged from the sealing adjustment plate 322, and the bottom door plate 321 moves vertically downwards and forms a gap h with the bottom door frame 31. The second roller 3342 and the third roller 3343 are in contact with the bottom door plate 321, and the bottom door plate 321 continues to move to the right until it is opened.

Closing of the bottom door: Before closing, the third roller 3343 is in contact with the bottom door plate 321, with a gap h between the bottom door plate 321 and the bottom door frame 31. When closing, the bottom door shaft 324 rotates, driving the gear 325 to rotate in the same direction, and the gear 325 is engaged with the racks 323, converting the rotation into translation, and driving the bottom door plate 321 to move to the left as shown in the figure. During the movement, the second roller 3342 is in contact with the bottom door plate 321, when moving to a position, the first roller 3341 is in contact with the bottom door plate 321, the third roller 3343 is in contact with the sealing adjustment plate 322, and the bottom door plate 321 moves vertically upwards and is fit to the bottom door frame 31 without a gap. The second roller 3342 is disengaged from the bottom door plate 321, and the bottom door plate 321 continues to move to the left until it is closed.

The aforementioned basic example of the present invention and its further selection examples can be arbitrarily combined to form multiple embodiments, which can be adopted and claimed by the present invention. In the solutions of the present invention, each selection example can be arbitrarily combined with any other basic example and selection example. All above are only preferred embodiments of the present invention, which do not limit the scope of the present invention. All alterations, equivalent replacements and improvements, without departing from the spirit and principle of the present invention, shall fall into the protection scope of the present invention.

## Claims

1. A large-volume grain hopper car suitable for a low-loading position hopper bin, comprising a car body (1), and **characterized in that** a loading opening of the car body (1) is provided with a top cover opening and closing mechanism (2), the top cover opening and closing mechanism (2) comprises a top cover (21) and a transmission shaft (22), the transmission shaft (22) is located inside the car body (1), the transmission shaft (22) is connected to a top cover driving mechanism, the transmission shaft (22) is hinged to a crank throw (212), and the crank throw (212) is hinged to the top cover (21).

2. The large-volume grain hopper car suitable for a low-loading position hopper bin according to claim 1, **characterized in that** the car body (1) comprises an underframe (11), the bottom of the underframe (11) is provided with a hopper (12), an upper portion of the underframe (11) is provided with front and rear side walls (13) as well as left and right end walls (14), a car roof (15) is provided on upper portions of the side walls (13) and the end walls (14), the hopper (12) is provided with an unloading opening, and the car roof (15) is provided with a loading opening.

3. The large-volume grain hopper car suitable for a low-loading position hopper bin according to claim 2, **characterized in that** the underframe (11) comprises left and right end sills (111) as well as front and rear side sills (114), a cross bearer (115) in the middle and crossties (116) at ends are arranged between the side sills (114), a draft sill (113) is provided between the end sill (111) and the outermost cross bearer (115), a body bolster (112) is provided between the draft sill (113) and the side sill (114), and a steel floor (117) located above is provided between the end sill (111) and the outermost cross bearer (115).

4. The large-volume grain hopper car suitable for a low-loading position hopper bin according to claim 2, **characterized in that** the side wall (13) comprises a top side sill (131), the top side sill (131) is connected to a lateral sidewall skin (132), the inner side of the sidewall skin (132) is provided with a partition wall (133), and the sidewall skin (132) is arc-shaped.

5. The large-volume grain hopper car suitable for a low-loading position hopper bin according to claim 1, **characterized in that** one side of the top cover (21) is hinged to a crank throw (212), the other side of the top cover (21) is hinged to a connecting lever (211), and the connecting lever (211) is hinged to the car body (1).

6. The large-volume grain hopper car suitable for a low-loading position hopper bin according to claim 5, **characterized in that** the loading opening of the car body (1) is provided with a transverse limit member, the transverse limit member is a transverse locking base (27), the transverse locking base (27) is provided with a locking groove, and a locking rod on the top cover (21) fits into the locking groove; and the loading opening of the car body is provided with a longitudinal limit member, and the longitudinal limit member is a longitudinal stopping block (26).

7. The large-volume grain hopper car suitable for a low-loading position hopper bin according to claim 5 or 6, **characterized in that** a lever stopping block (28) is provided on the car body, and the lever stopping block (28) is located at the opening position of the connecting lever (211).

8. The large-volume grain hopper car suitable for a low-loading position hopper bin according to claim 1, **characterized in that** the unloading opening of the car body (1) is provided with a sealed bottom door mechanism (3), the sealed bottom door mechanism (3) comprises a bottom door frame (31), a bottom door (32) and a slideway, the bottom door (32) is slidably disposed on the slideway, the bottom door frame (31) is in contact fit with the bottom door (32), and a support portion on the slideway has a support height gradually increasing along a closing direction, and/or a lifting portion of the bottom door (32) has a lifting height gradually increasing along an opening direction.

9. The large-volume grain hopper car suitable for a low-loading position hopper bin according to claim 8, **characterized in that** the bottom door (32) comprises a bottom door plate (321), the bottom door plate (321) is slidably disposed on the slideway, and the bottom door plate (321) is connected to a sliding drive mechanism.

10. The large-volume grain hopper car suitable for a low-loading position hopper bin according to claim 8 or 9, **characterized in that** an upper portion of the slideway is provided with a low support portion and a high support portion, and a height difference between the low support portion and the high support portion is h; and a lower portion of the bottom door (32) is provided with a low lifting portion and a high lifting portion, and a height difference between the low lifting portion and the high lifting portion is h.
